# EUROPEAN PATENT SPECIFICATION

(11) **EP 1 003 388 B1**
(45) Date of publication and mention of the grant of the patent: **28.08.2002**
(21) Application number: 98925667.2
(22) Date of filing: 11.06.1998
(51) Int. Cl.: A23L 1/29, A21D 2/08, A21D 13/00

(54) **PRODUCT, METHOD FOR ITS MANUFACTURE, AND ITS USE**
PRODUKT, VERFAHREN ZU SEINER HERSTELLUNG SOWIE SEINE VERWENDUNG
PRODUIT, SON PROCEDE DE PREPARATION ET SON UTILISATION

(30) Priority: 13.06.1997 FI 972532
(43) Date of publication of application: 31.05.2000
(73) Proprietor: Danisco Finland OY, 02150 Espoo (FI)
(72) Inventor: HAARASILTA, Sampsa, FIN-04230 Kerava (FI); REINIKAINEN, Tapani, FIN-00200 Helsinki (FI); SULANTO, Seija, FIN-00980 Helsinki (FI)
(74) Representative: Lax, Monica Ingeborg
(86) International application number: FI9800503
(87) International publication number: WO98058554

(56) References cited:
- WO-A-95/08342
- WO-A-98/13023
- GB-A- 934 686
- US-A- 3 881 005
- US-A- 5 244 887
- FILE WPI, Derwent Accession No. 75-18814W, LENINGRAD FOOD RES. INST., "Dietetic Pastries Contg. beta-Sitosterol - for Use by Patients with Lipid Exchange Disorder"; & SU,A,414 989 (18-09-74) DW7511.
- FILE WPI, Derwent Accession No. 91-027533, SNOW BRAND MILK PROD. CO. LTD., "Mfg. Biscuits for Improving Lipid in Blood - by Admixing Vegetable Sterol Contg. beta-Sitosterol in Flour"; & JP,A,02 299 548 (11-12-90) DW9830.
- FOOD CHEMISTRY, Volume 8, 1982, I.B. AGATER et al., "Determination of beta-Sitosterol in Meats, Soya and Other Protein Products", pages 43-49.
- FILE WPI, Derwent Accession No. 87-268028, AJINOMOTO K.K. et al., "Stabilised Sterol Compsn. - Comprises Emulsion or Soln. of Sterol in Liq. Poly: ol or its aq. Soln. with Sucrose- and/or Poly:Glycerol-Fatty Acid Ester(s)"; & JP,A,62 186 936 (15-08-87) DW8738.

## Description

### FIELD OF THE INVENTION

The invention relates to a premix useful in food industry, the premix containing a pulverized plant sterol and a conventional foodstuff ingredient which is cereal, leguminous plant, milk powder or the like, such as fruit, vegetable and/or berry, particularly in a powder form, bone, feather, fish, meat or rind. The invention further relates to methods for preparing the premix, to the use of the premix as such and in the manufacture of foodstuffs, and to edible products containing the premix. In particular, bakery products containing the premix in accordance with the invention are described.

### BACKGROUND

The cholesterol-lowering effect of plant sterols has been known since the 1950's, and the literature of the field therefore includes several reports concerning the positive effects of plant sterols on the cholesterol level. New reports include, for example, the research by Heinemann et al., Eur. J. Clin. Pharmacol. 40 (Suppl. 1), 1991, 59-63, about the effect of sitostanol and sitosterol on the absorption of cholesterol in the intestine by using an intestinal perfusion technique. Sitostanol was found to reduce the cholesterol absorption by as much as 85% and sitosterol by 50%.

Nevertheless, the use of plant sterols has not been very extensive, due to for example their poor availability and therefore high price. One of the greatest problems has been the poor solubility of plant sterols, since they are not soluble in water and are also poorly soluble in fats. The manufacture of edible products containing plant sterols is thus technically difficult, and the final products are not satisfactory as regards structure and taste characteristics.

Attempts have been made to solve the solubility problem by producing fat-soluble forms, such as fatty acid esters, from the plant sterols by dissolving or emulsifying the plant sterols or said derivatives in a fat or a fat component and by using them particularly in connection with the use of fats. Methods for preparing fat-soluble plant sterol esters are disclosed, for example, in EP 195 311 (Yoshikawa Oil & Fat Co., Ltd.), DE 2,035,069 (Procter & Gamble Co.) and WO 92/19640 (Raision Margariini Oy). Solubilized sterol compositions are disclosed, for example, in EP 289 636 (Asahi Denka Kogyo Kabushiki Kaisha) and in U.S. Patent 5,244,887 (Straub). However, the use of fat is not nutritionally recommendable, especially when the objective is to lower the blood cholesterol level and to avoid excessive energy intake.

So there is an obvious demand for providing the consumer with agreeable plant sterol products which do not require the use of fat. Hence, there is a particular demand for such products that are applicable to everyday use and preferably familiar to the consumers, and also otherwise, are a part of a normal diet. These products comprise, for example, products containing cereal, ready-prepared foods and processed meat products. Bread and other bakery products can be mentioned as a special field.

The literature of the field describes the plant sterol added as such to bakery products. The Soviet patent 414 989 discloses a method for manufacturing dietetic baked products containing β-sitosterol. In accordance with the method, β-sitosterol, that is premixed with vegetable oil, is mixed with the other dough ingredients, whereby the flour is added last, and the obtained dough is moulded and baked in the oven. The amount of β-sitosterol is preferably at least 5% by weight of the final product. According to the reference, the products are suitable for persons having disturbances in lipid metabolism, but the characteristics of the products are not described in greater detail, and their effects are not disclosed either. Neither does the reference mention processing problems due to the poor solubility of β-sitosterol, and thus no solution is disclosed for these problems. In particular, it can be noted that even at temperatures exceeding 80° C sitosterol dissolves very slowly in fat and solidifies quickly. Baking is thus technically difficult. Moreover, the use of hot oil in a bakery is problematic because of the oxidation risk and effects on native gluten and living yeast.

The Japanese Patent application Hei 2-299548 discloses a baked cholesterol-lowering product containing β-sitosterol and a method for its manufacture. According to the reference, the baked products may be, for example, biscuits, cookies or the like, and they are prepared by adding β-sitosterol, that is premixed with wheat flour and/or egg white, to the other dough ingredients, by mixing and processing the dough in a conventional manner. The baked product preferably contains β-sitosterol 1 to 30% by weight, according to the reference, an amount exceeding that brings about a strange mouth-feel. According to the reference, a smoother dough whose processing properties improve is obtained in this manner by adding the β-sitosterol to the flour and/or egg white. However, the tests conducted in connection with the present invention show clearly that commercially available sitosterol and sitostanol preparations do not mix well enough manually with wheat or rye flour, but they tend to cake causing, for example, processing problems and white lumps in the crumb and crust of bakery products.

Practice has thus shown that the prior art methods are not sufficient to solve the processing problems. When β-sitosterol is used as such, even though premixed with fat, flour or some other suitable component, it is impossible to produce a homogenous and smooth dough. Lumps appearing in the dough hamper the normal use of the devices at the dough forming and processing steps, such as a moulding step, and at the proofing step the rise remains weaker than usual. As a consequence, the final products obtained are flat and deformed bakery products, which the consumer finds unpleasant and strange by structure, appearance and mouth-feel. It is to be mentioned that sitosterols and sitostanols as such have no adverse effect on the taste or mouth-feel of the products. The problems are the poor solubility of the compounds, particularly insolubility in water, and caking during the use.

### DESCRIPTION OF THE INVENTION

The object of the present invention is to provide such a plant sterol product that can be used as an edible product as such or in the manufacture of other edible products without that is causes processing problems or strange taste or structure characteristics in the final product.

The object of the present invention is also to provide such edible products that have a cholesterol-lowering effect thanks to the plant sterol they contain, but whose other characteristics are familiar and agreeable to the consumer.

In accordance with the present invention, these objects are achieved by forming a premix that contains a pulverized plant sterol and a conventional foodstuff raw material that is selected from a group comprising cereal, leguminous plants, milk powder and/or fruit, vegetables and berries, particularly in a powder form, and bone, feather, fish, meat and/or rind, and by using this premix as such or in the manufacture of edible products, instead of an untreated plant sterol or a plant sterol derivative modified in its solubility characteristics.

Thus the invention relates to a premix containing a pulverized plant sterol and/or stanol and a conventional foodstuff raw material which is cereal, leguminous plant, milk powder and/or fruit, vegetable or berry, particularly in a powder form, bone, feather, fish, meat and/or rind, and having a mean particle size of less than about 600 µm.

The invention also relates to methods for manufacturing the premix.

The invention further relates to the use of the premix as an edible product as such, as an additive in other edible products, or in the manufacture of other edible products.

The invention particularly relates to the use of the premix in the manufacture of bakery products.

The invention also relates to bakery products containing the premix in accordance with the invention.

Further, the invention relates to the use of a plant sterol and/or stanol in bakery products as an anti-staling agent; and to bakery products containing added amounts of plant sterol and/or stanol as an anti-staling agent.

So the premix in accordance with the present invention comprises two main components, a pulverized plant sterol and a conventional foodstuff raw material which is cereal, leguminous plant, milk powder, fruit, vegetable and/or berry, bone, feather, fish, meat or rind.

The plant sterol may be any phytosterol having a cholesterol-lowering effect. The plant sterol is preferably β-sitosterol, i.e. 24-ethyl-5-cholesten-3β-ol, or especially its hydrogenated form β-sitostanol, i.e. 24-ethyl-5α-cholestan-3β-ol. Other suitable plant sterols include for example brassicasterol, campestenol and clionastanol. Commercially available plant sterols are often mixtures of plant sterols that are also appropriate for use according to the present invention.

The other main ingredient of the premix is preferably cereal or the like. In the present invention, this term refers to, for instance, ordinary cereals, such as wheat, rye, barley, oat, buckwheat, millet, and maize, rice and potato starch. Leguminous plants include, for instance, soybean, pea and other beans. Cereals and leguminous plants can be used in a form of various flours or flour products. Concerning wheat, for instance, wheat bran, coarsely ground wholemeal wheat, wheat germs, grit, and flours of various degrees of grinding, such as wholemeal flour, yeast bread flour, coarse wheat flour, kernel wheat flour, and so on, can be used, and concerning rye, for instance, wholemeal rye flour, sifted rye flour, bolted rye flour, coarsely ground wholemeal rye, and so on, can be used. Instead of flour, also seeds or grains can preferably be used as such or pretreated in a suitable manner, like for instance, husked, polished or pre-crushed. The premix may also contain milk powder as the other main ingredient, the milk powder being a widely used bulking agent in food industry, or berry, vegetable or fruit, especially in a powder form, or, particularly as a raw material of animal feed industry, bone, feather and rind, meat or fish.

The premix is preferably a mixture forming a suspension, preferably containing, in addition to the plant sterol, as the second main ingredient a suspension forming substance slowly soluble or insoluble in water, such as ground cereal, leguminous plant or milk powder. A homogenous premix is thus obtained, in which plant sterol particles are evenly distributed among flour particles or even adsorbed onto their surface. Due to its poor solubility, the premix does not dissolve, even during the use, causing separation of insoluble plant sterol, but the mixture remains constantly homogenous and it is easy to form an even suspension, when necessary.

In addition to the above-mentioned ingredients, the premix may also contain salt and other minor components, such as vitamins, trace elements, seasonings, emulsifying, stabilizing and thickening agents, enzymes, etc. However, their proportion is so insignificant that it is not feasible to add the plant sterol to the premix by means of them.

The premix may also contain water, however, the state is generally solid or semi-solid, for instance, such that can be extruded, pumped, spooned out or even drunk.

The amounts of the plant sterol and the second main ingredient in the premix may vary greatly according to the composition and use of the premix. Generally, the amount of the plant sterol is about 1 to 60% by weight, preferably about 5 to 50%, more preferably about 10 to 40%, and most preferably about 10 to 20% by weight.

A preferred premix is a mixture containing a plant sterol and flour. The flour is preferably rye, buckwheat, maize or wheat flour, and the premix contains about 5 to 25%, most preferably about 10 to 20%, of plant sterol. In a preferred embodiment, the premix contains 5 to 25% sitosterol or sitostanol, preferably 10 to 20%, and cereal. In the most preferred form the premix does not contain any other components. However, the premix may contain a varying amount of water, and for instance, thickening agent.

The premix may be a so called premix, to which considerable amounts of other substances are added in connection with the use, or a so called complete mix, that is not supplemented with other substances in connection with the use, possibly apart from water or other liquid.

The method in accordance with the invention for preparing a premix is characterized in that a homogenous, pulverized mixture having a mean particle size of less than about 600 µm is formed from a plant sterol and/or stanol and a conventional foodstuff raw material, which is cereal, leguminous plant, milk powder or the like, such as berry, vegetable or fruit, especially in the form of powder, bone, feather, fish, meat or rind.

In accordance with the present invention, the premix is preferably prepared by grinding the plant sterol and the second main ingredient together to form a pulverized mixture. Grinding can be carried out by using any process by which sufficiently finely divided and homogenous premix is obtained, in order that the above-mentioned problems can be avoided. Hence, applicable processes comprise, for example, methods based on kinetic energy, methods based on quick impact-mixing, methods based on the use of friction, etc. Methods and devices applicable to grinding are disclosed, for instance, in patent applications Fl 963904 and Fl 932853.

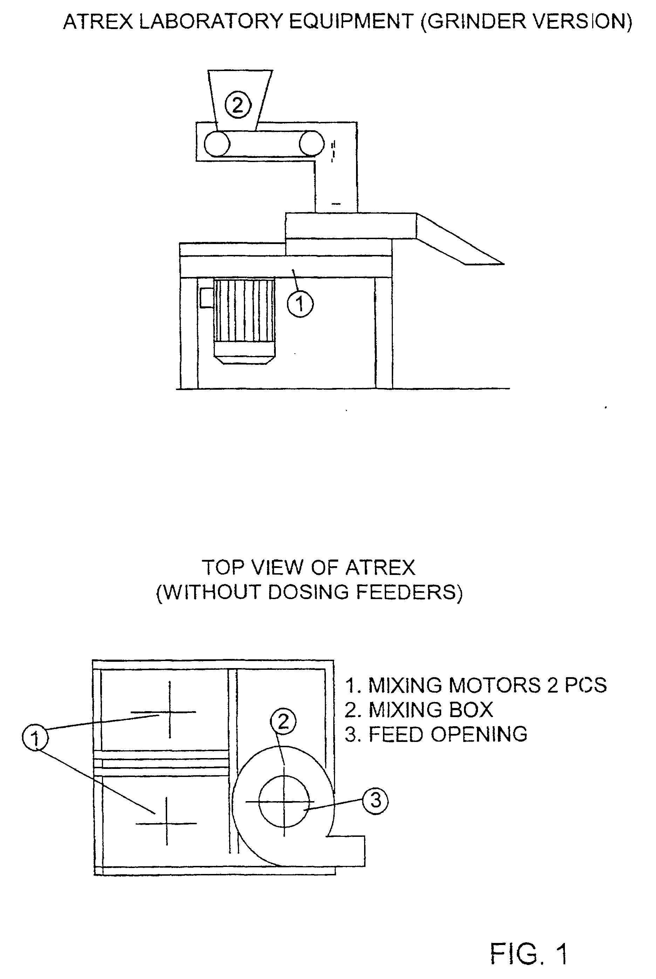

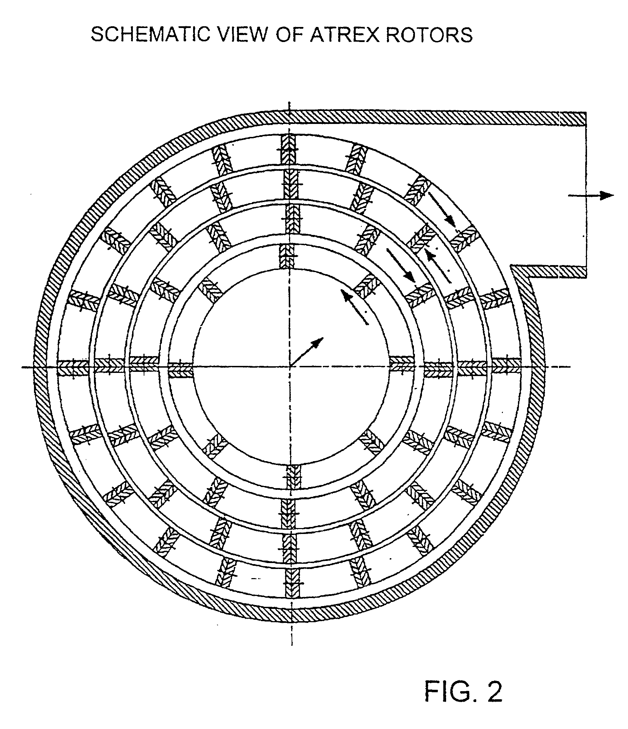

in the present invention, an advantageous method is to grind a plant sterol and cereal, a cereal mixture or the like together with a grinder operating on a so called impact milling principle. For instance, Atrex mill of Megatrex Oy represents this kind of a device. The structure of the device is shown as a schematic view in Figure 1, the operating principle of the rotors is illustrated in Figure 2. A device of this type can be used both for forming a very finely divided mixture, whereby the plant sterol is generally ground as such or together with flour, milk powder or fruit, berry or vegetable powder, bone, feather, meat, fish or rind, and for forming a mixture of greater particle size, whereby even grains of cereal and seeds of leguminous plants as such or pretreated in a suitable manner can be used. A particularly advantageous method for grinding the plant sterol and the cereal or the like is an impact milling method, in which the plant sterol and the grains of cereal, in the form of whole grains, husked grains, pre-crushed grains or husked, pre-crushed grains, are homogenized and pulverized together by a quick impact-mixing treatment using an Atrex mill or mixer or a similar device. In the present invention, it was found that a completely homogenous mixture was obtained in this i way, the particle size being a less important parameter. Even though the inventors do not wish to commit themselves to any particular theory, they believe that the plant sterol is here adsorbed onto the surface of grains, thus facilitating the formation of a homogenous mixture. This method is well suited for preparing a cereal-based premix containing plant sterol, the premix containing in a preferred form only plant sterol and rye, buckwheat, maize or wheat flour. The premix grinding can be controlled by attaching a sifting and/or classifying device to the grinding device. So if necessary, coarse fractions can be re-supplied to the impact milling device for further grinding. Grinding can be carried out both as dry grinding and wet grinding, whereby the temperature and moisture control is effected by adjusting the power of the impact milling device and/or the amount of liquid in the device. In the present invention, dry grinding is considered advantageous. The moisture content of cereal does not place restrictions on processing, but in practice it is easy to use storage moist cereal. When a mixture of storage moist cereal and a plant sterol is pulverized with a device based on quick impact-mixing, without additional liquid or with the lowest possible amount of liquid, using a high homogenizing power, the temperature of the grains rises due to the effect of mechanical energy on the grains, whereby a heat treatment of the grains is provided in conjunction with grinding, which increases the falling number of the grains, and as a consequence the baking characteristics of the cereal improve. Thus the falling number of cereal does not place any restrictions either, so cereal having a lower falling number can also be used in the implementations in accordance with the invention.

The pulverization in accordance with the invention can also be carried out, for example, with an air jet mill wherein the particles that have been fluidized into a carrier gas, typically air, and that are to be pulverized, are conducted to collide at a high speed. This pulverizer preferably also comprises a classifier where the pulverized material is classified into fractions having different particle sizes. The dry grinding, as also the wet grinding, can also be carried out in mills based on the use of friction, for example in a ball mill.

The parameters used in the grinding in each particular case are determined according to the structure of the grinding device used and the substance or mixture to be pulverized.

The premix of the invention can also be prepared by mixing the separately pulverized ingredients carefully together into a homogenous mixture. A pulverized plant sterol can be formed in various ways for this purpose. A pulverized plant sterol can thus be obtained by sifting, for instance, a commercially available plant sterol product. Sifting is carried out by using conventional methods and sifters. For instance, a widely used sifting device in baking by Bühler-Miag, Milan, Italy, with mesh sizes of 1600 µm, 1000 µm, 670 µm, 390 µm, 275 µm and 132 µm is excellently suited for this purpose. Another way to prepare pulverized plant sterol is to grind the plant sterol as such, for instance, with a mill based on impact milling principle, with a mill based on kinetic energy, with a mill based on friction or with a mill based on collision energy.

Also in this case, the pulverization can be carried out on a crystalline plant sterol as such or on a mixture of a plant sterol and a second component, such as an appropriate admixture. Appropriate admixtures for the present invention comprise, for example, various sweetening agents and other structure and/or flavour enhancers. Methods that are particularly suitable for this purpose are disclosed in Finnish patent application 963904.

The above-described methods can be used to form a homogenous premix from a pulverized plant sterol and the second main ingredient of the premix, i.e. cereal, leguminous plant, milk powder or the like, such as berry, fruit and vegetable, especially in a powder form, bone, feather, fish, meat or rind, and other possible ingredients. When using a pulverized plant sterol, the pulverization is less important than the certainty of homogenization. Hence, also other methods, that are partly insufficient for pulverization, are well suited for preparing a premix like this. If both ingredients are in a pulverized form, mills, homogenizing devices and grinding devices used in food industry are applicable to form a premix. Particularly devices used in meat processing and baking industries have proved to be useful in the present invention. By way of example, blenders, such as devices of Lödige type, can be mentioned.

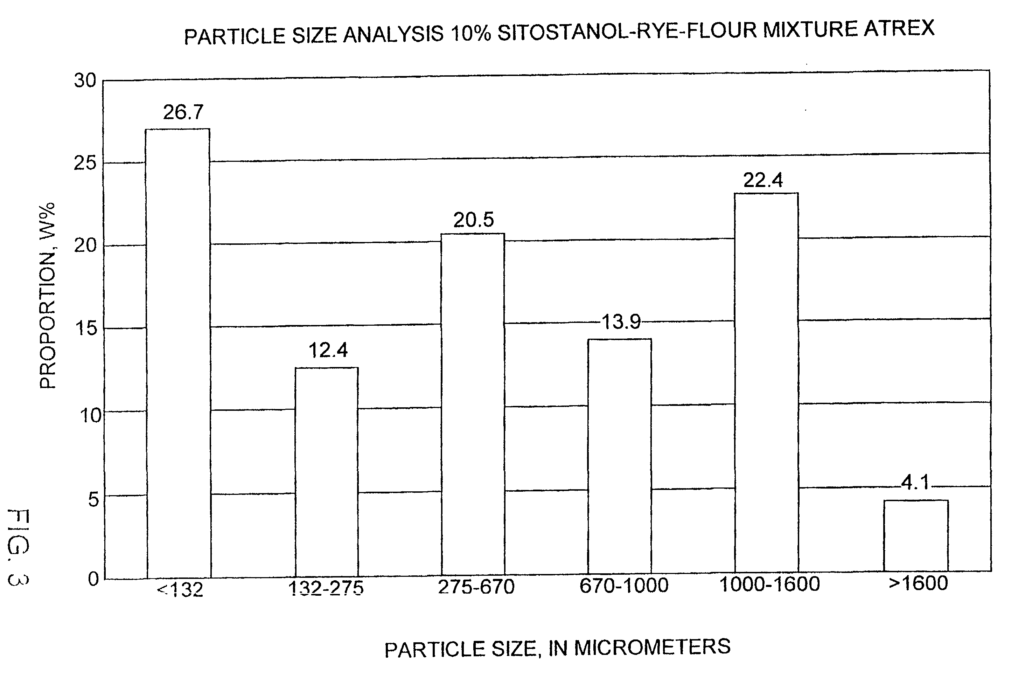

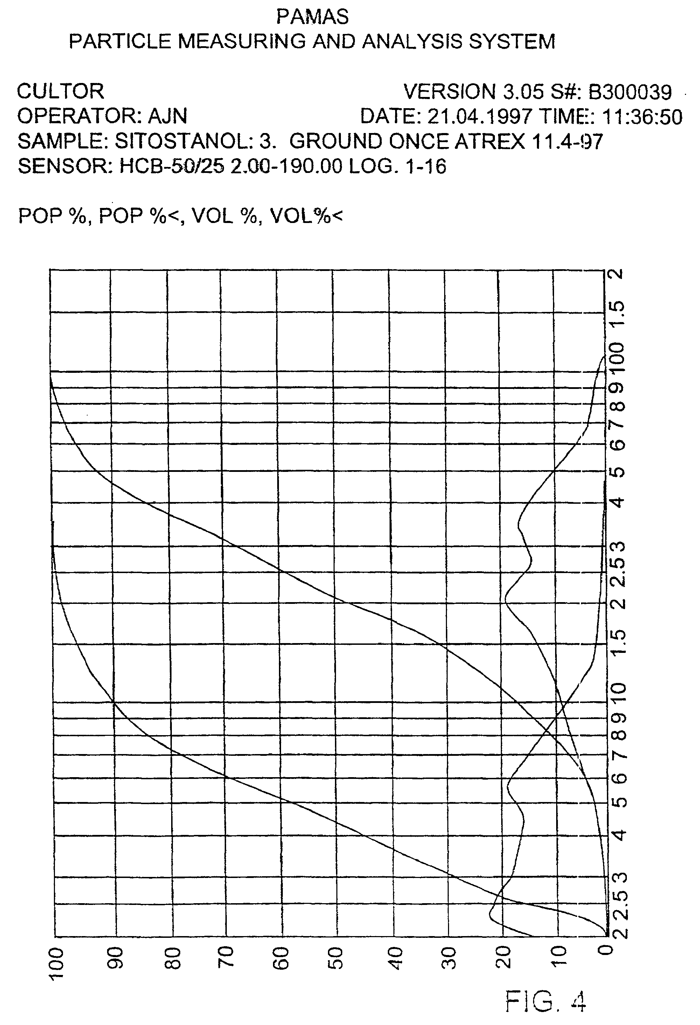

The sufficient degree of pulverization and homogeneity of the premix, and the plant sterol contained therein, is determined in accordance with each implementation. In granular products, such as animal feed, a premix, whose degree of grinding is not as high as that of a plant sterol used in delicate bakery products made from wheat, can thus be used in general. The manufacturing process is also of significance. Thus, it has been found that if the plant sterol is pulverized as such to be mixed, for instance, with flour, the particle size is generally to be small, less than about 200 µm, most preferably less than 132 µm, preferably about 60 to 70 µm, in order that the outcome is good. Thus, in a preferred embodiment the plant sterol and/or stanol and the cereal are jet-pulverized together to a mean particle size of less than 200 µm, preferably less than 20 to 132 µm, most preferably about 20 to 70 µm and particularly 60 to 70 µm. On the other hand, when the plant sterol is ground, in accordance with a preferred method of the invention, together with grains of cereal, the particle size of mixture components is not so significant, but a homogenous mixture is obtained even with a mean particle size of about 500 µm. Consequently, the particle size of a product used in accordance with the present invention varies considerably. Figure 3 shows the results of a particle-size analysis of the premix formed by the above-mentioned preferred method. The analysis was carried out by sifting a 10% sitostanol-rye-flour mixture with the above-mentioned Bühler-Miag sifting device for 5 minutes using sifters of 1600 µm, 1000 µm, 670 µm, 275 µm and 132 µm. The results of a particle-size analysis (PAMAS) of sitostanol ground once with an Atrex grinder are shown in Figure 4, respectively.

The premix of the invention is widely applicable for use. The premix can be used as an edible product as such, as an additive in edible products or as an ingredient in the manufacture of other edible products. Due to its structure, plant sterol content and high fibre content, it is particularly well suited for consumption, in the same fashion like muesli, bran or cereals, as accompaniment to, for instance, curdled milk, yoghurt, sour milk and other milk products, thickened dessert soups, berry soups and the like. In households, it can also be used for making porridges, gruels and high-fibre drinks and snacks. It is applicable to the same uses also in food industry where a product of the type of a so called instant porridge or gruel, a high-fibre milk product or a drink containing cereal, etc, can be produced therefrom, in addition to which it can naturally be sold in a form of conventional baking flour, pizza making flour or a porridge mix. The premix is also an extremely good ingredient in meat processing industry for the manufacture of various types of sausages and meat mixes, and in processed and ready-to-eat food industries where suitable applications abound from pea soup to liver-rice casserole and macaroni-meat casserole. One particular use is also fibre-containing sweets, such as liquorice. It is to be noted, that in the present invention, the terms food product and food industry also comprise animal feeds and fodders and the manufacture thereof. The premix is also naturally applicable to use in animal feeds, compressed and dry pet foods, and processed and ready-to-eat foods. The premix can thus be used e.g. in food processing industry, meat processing industry, dairy industry, baking industry, confectionery industry, beverage industry or animal feed industry. A preferred implementation of the present invention is the manufacture of bakery products.

In accordance with the present invention, a preferred final product is a bakery product containing the premix of the invention.

The bakery product in accordance with the invention may be a soft bakery product, such as a bread (wheat bread, rye bread, yeast bread, etc), a sweet baked product (coffee bread, cake, pastry, etc) or a dry bakery product, such as a crispbread, a digestive biscuit, other sweet or salted biscuit, a rusk, a thin crispbread, a cracker, a baked snack, a wafer, an after-heat bread or the like.

Bakery products are prepared following the conventional methods and recipes of the field, but a pulverized plant sterol is added as a premix or a semi-finished product or as such. The most advantageous method is to form the premix in connection with baking, i.e. to add then the pulverized plant sterol as such to the flour, or to use premixes or semi-finished products, which are also mixed first with the flour, whereafter the dough is prepared in a conventional manner.

The bakery product of the invention thus comprises a premix containing pulverized plant sterol and cereal, leguminous plant, milk powder, fruit, berry and/or vegetable, especially in powder form, and conventional ingredients of bakery products. The bakery product contains a sufficient amount of plant sterol for achieving a desired effect. A useful amount is about 0.3 to 5.0%, preferably about 0.5 to 3.0% and most preferably about 1 to 2% of plant sterol. Hence for instance, a bread serving of about 100 to 150 g (2 to 4 slices) provides a sufficient amount of plant sterol for achieving the desired physiological effect, i.e. a lowering effect on blood cholesterol level. It is to be mentioned, that excessive plant sterol contents, for instance a content of 6 to 10%, may have an adverse effect on the appearance of the bakery product, causing unpleasant gray shine on the surface of the product. However, it is obvious that the values given, like all other numerical values given herein, are only trend-setting. In accordance with the invention, any amount that is sufficient for achieving the desired effect and that has no adverse effect on the structure or taste characteristics of the final product can thus be used.

The invention further relates to the use of the premix or the product, particularly a bakery product, containing premix, as a cholesterol-lowering substance.

In the present invention, the plant sterol is found to have an improving effect on the structure and taste of bakery products as well as on their shelf life. Thus the invention also relates to the use of the plant sterol in bakery products as an agent improving structure and shelf life. For this purpose, equivalent amounts of plant sterol is added to a bakery product as described above.

The invention is described in greater detail by means of the following examples. These examples are only provided to illustrate the invention, and they should not be considered to restrict the scope of the invention in any way.

### Example 1

### a) Preparation of a pulverized plant sterol by jet-pulverizing

4 kg of sitostanol (Kaukas Oy) was jet-pulverized with a dry collision grinder using a classifier (Oy Finnpulva Ab), grinder FP3). The carrier gas was air having a temperature of about 60°C and a feed pressure of 2 to 3 bar.

### b) Preparation of a pulverized plant sterol by impact-milling

6 kg of β-sitosterol was pulverized with a grinder based on the impact milling principle (Atrex mill, Megatrex Oy, Harjavalta).

Processing conditions were as follows:

| | |
|---|---|
| Upper rotor (rpm) | 3000 |
| Lower rotor (rpm) | 3000 |
| Mass flow (kg/min) | 1 |
| Temperature (°C) | 25 |

When passing through the grinder, the plant sterol particles are ground into a pulverized mixture whose volumetric mean particle size is about 21 µm. PAMAS analysis of the particle size distribution of the mixture is shown in Figure 4.

### Example 2

### Preparation of a homogenous plant-sterol-flour mixture suitable for baking

2 kg of pulverized plant sterol (β-sitosterol or β-sitostanol, Kaukas Oy) was carefully mixed in a tub with 18 kg of grains of cereal. The grains may be grains of rye or grains of wheat husked in various ways. The mixture was ground with a grinder based on the impact milling principle, the grinder represented by the Atrex mill (Megatrex Oy, Harjavalta). Figure 1 shows a schematic view of the structure of an Atrex mill. Figure 2 illustrates the principle of the rotors.

Processing conditions were as follows:

| | |
|---|---|
| Upper rotor (rpm) | 3000 |
| Lower rotor (rpm) | 3000 |
| Mass flow of grains (kg/min) | 2.5 |
| Temperature of rye (°C) | 25 |

When passing through the grinder, the grains are crushed and the plant sterol particles are ground with the grains into a homogenous plant sterol-flour mixture.

### Example 3

### Preparation of a homogenous plant-sterol-flour mixture suitable for baking

0.5 kg of pulverized plant sterol (prepared according to example 1) having a particle size of less than 132 µm was mixed with 4.5 kg of rye flour with a Lödige mixer (Gebrüder Lödige Maschinenbau GmbH, Paderborn, Germany). The mixing time was 15 min.

With the method a homogenous plant-sterol-flour mixture suitable for baking can also be produced with wheat flour, yeast bread flour or wholemeal flour.

### Example 4

### Preparation of a pulverized plant-sterol-sugar mixture

20 kg of sitosterol (Kaukas Oy) was added as such to 180 kg of saccharose and the mixture was jet-pulverized with a dry collision grinder using a classifier (Oy Finnpulva Ab, grinder FP3P, classifier FPC15R). The carrier gas was air having a temperature of 63°C and a feed pressure of 2.4 bar.

### Example 5

### Preparation of a rye bread containing plant sterol

A rye bread was prepared in a conventional manner, but part of the rye flour was replaced with a flour mixture containing 10% sitostanol, to the effect that the plant sterol content of the dough was 1.5%. The plant-sterol-flour mixture was prepared according to example 2.

The bread composition was as follows:

| | |
|---|---|
| Sourdough | 500 g |
| Rye flour (coarse) | 150 g |
| 10% plant-sterol-rye-flour mixture | 150 g |
| Yeast bread flour | 100 g |
| Salt | 15 g |
| Yeast (compressed) | 15 g |

The dough was mixed with a Hobart mixer (Hobart Canada, North York, Ontario, Canada) for 1 minute at speed 1 and thereafter for 4 min at speed 2. The lay time of dough was 60 min. The dough was scaled into a bar and put into a dough mould. The proofing time was 40 min and humidity 70 to 75%. The bread was baked in the oven for 35 to 40 min at a temperature of 230 to 240°C.

A reference bread containing no plant sterol was prepared according to the same recipe. The bread containing plant sterol was slightly lighter in colour, the structure (porosity, pore size, crumbliness, smoothness), mouth-feel, aroma and taste corresponded to those of the reference bread. The results of the analysis showed that the plant sterol added as a flour premix distributes evenly in bread, and does not dissolve or oxidize during the baking process used.

### Example 6

### Preparation of a rye bread containing plant sterol

A rye bread was prepared in the manner described in example 5, but using a flour mixture containing 20% sitosterol prepared according to example 3.

A reference bread was a rye bread prepared according to the same recipe but without the sitosterol addition. No differences were found in the structure or stiffness of the doughs in this test, nor were there differences in the taste of the breads. However, the bread containing plant sterol was slightly lighter in colour than the reference bread.

### Example 7

### Preparation of a rye bread containing plant sterol

A pulverized sitosterol having a particle size of less than 132 µm and prepared according to example 1 was manually mixed with the flour before other ingredients were added. Mixing was carried out very carefully and lumps forming in the flour mixture were broken. The dough contained plant sterol 1.3% by weight.

Bread composition:

| | |
|---|---|
| Sourdough of crushed cereal | 500 g |
| Rye flour | 287 g |
| Pulverized plant sterol | 13 g |
| Water (37°) | 100 g |
| Yeast bread flour | 100 g |
| Salt | 15 g |
| Yeast (compressed) | 15 g |

Baking conditions were the same as in example 5. The bread containing plant sterol was slightly lighter. The structure of bread (porosity, pore size, crumbliness, smoothness), mouth-feel, aroma and taste corresponded to those of the reference bread.

### Example 8

### Preparation of a rye bread containing plant sterol

The test baking described in example 7 was repeated using a sifted sitostanol with a particle size of less than 132 µm instead of the pulverized sitosterol. Also this test produced a bread having a slightly lighter colour and corresponding in structure and taste to the reference bread.

### Example 9

### Preparation of a wheat bread containing plant sterol

Part of the flour was replaced with a premix containing 10% sitostanol. The premix was prepared according to example 2 by grinding plant sterol together with husked grains of wheat (ash content 1.78). The degree of husking corresponds to dark wheat grit. The plant sterol content was 1.5% by the dough weight.

Bread composition was as follows:

| | |
|---|---|
| Wheat flour | 454 g |
| 10% plant-sterol-wheat-flour mixture | 150 g |
| Sugar | |
| Rape-seed oil | 13 g |
| Water | 350 g |
| Bread improver (Supergamma, Zeelandia) | 9 g |

The ingredients were mixed with a Hobart mixer for 1 minute at speed 1, and thereafter for 4 min at speed 2. The dough lay time was 10 min. The proofing time was 40 min and humidity 70 to 75%. The breads were baked in the oven for 17 min at a temperature of 210°C.

A reference bread containing no plant sterol was prepared according to the same recipe. The appearance, aroma, taste and structure (porosity, pore size, smoothness) of the bread containing plant sterol corresponded to those of the reference bread. The bread containing plant sterol had a moister mouth-feel and it kept fresh for 5 days.

### Example 10

### Preparation of buns containing plant sterol

A plant sterol was added to a dough by replacing part of the sugar with a sugar-sitosterol premix jet-pulverized according to example 4, the mixture being mixed with the wheat flour before liquid and fat were added. The plant sterol content of the dough was 2%.

Composition of buns was as follows:

| | |
|---|---|
| Wheat flour, semi-coarse | 210 g |
| Wheat flour, coarse | 210 g |
| Granulated sugar | 48 g |
| 33% sugar-plant-sterol mixture | 55 g |
| Salt | 5 g |
| Cardamom | 3 g |
| Margarine | 100 g |
| Milk | 250 g |
| Baking yeast (compressed) | 25 g |

The dough lay time was 40 min, temperature 36°C and humidity 75%. The dough was moulded into small buns, proofed for 30 min at a temperature of 36°C and in 75% humidity and baked in the oven for 10 min at a temperature of 225°C.

Buns containing no plant sterol were prepared according to the same recipe as a reference sample. The appearance of buns containing plant sterol completely corresponded to that of the reference sample. Likewise, aroma, taste and structure (porosity, pore size, smoothness) were identical. It was clearly found also here that the plant sterol gives a bakery product an agreeable fatty feel that remains longer than in a conventional bun.

### Example 11

### Preparation of buns containing plant sterol

Buns were prepared according to the following recipe. The plant sterol was added by replacing part of the wheat flour with flour-plant-sterol mixtures that were prepared according to examples 2 or 3. The plant sterol mixtures must be added well mixed to the wheat flour. The plant sterol content of the dough was 2%.

Composition of buns was as follows:

| | |
|---|---|
| Wheat flour, semi-coarse | 32 g |
| Wheat flour, coarse | 210 g |
| 10% wheat-flour-plant-sterol mixture | 178 g |
| Sugar | 85 g |
| Salt | 5 g |
| Cardamom | 3 g |
| Margarine | 100 g |
| Milk | 250 g |
| Baking yeast | 25 g |

The dough lay time was 40 min, temperature 36°C and humidity 75%. The dough was moulded into small buns, proofed for 30 min at a temperature of 36°C and in 75% humidity, and baked in the oven for 10 min at a temperature of 225°C.

Buns containing no plant sterol were prepared according to the same recipe as a reference sample. The appearance of the buns containing plant sterol completely corresponded to that of the reference sample. Likewise, aroma, taste and structure (porosity, pore size, smoothness) were identical. The bun containing plant sterol had a moister mouth-feel and it kept its freshness longer.

### Example 12

### Preparation of a rye crispbread containing plant sterol

A crispbread was prepared by using a conventional crispbread recipe (Pieni Pyöreä, Vaasan Mylly). The plant sterol was added by replacing part of the flour with a plant-sterol-flour premix prepared according to example 2 or 3, otherwise baking was carried out in a conventional manner. The plant sterol content of the dough was 0.75%.

The characteristics and sensory evaluation of the crispbread containing plant sterol and the reference bread not containing plant sterol are presented in Table 1.

**Table 1**

| Characteristics of rye crispbreads containing 0.75% sitostanol | | |
|---|---|---|
| | Reference | Crispbread containing sitostanol |
| I Physical characteristics | | |
| Height (10 pcs) | 86 mm | 75 mm |
| Weight (10 pcs) | 118 g | 126 g |
| Moisture | 6.9% | 7,4% |
| Volume weight | 0.220 g/ml | 0.292 g/ml |
| Crumbliness | 21 | 57 |

| II Sensory evaluation (scale from 1 to 5) | | |
|---|---|---|
| Appearance | 4 | 3 |
| Smell | 5 | 5 |
| Taste | 4 | 4 |
| Structure | 4 | 3 |

Thus the addition of a plant sterol to a rye crispbread dough has an effect on structure; the bread is flatter than the reference bread, even though it is quite satisfactory as a product. Due to the delicacy of the rye crispbread, it is advisable to keep the amount of plant sterol low, most preferably lower than 1.5%.

### Example 13

### Preparation of a rye crispbread containing plant sterol

A crispbread was prepared with the method described in example 12, but using a sitostanol-flour premix prepared according to example 3. Alternatively, a pulverized plant sterol having a particle size of less than 132 µm, mixed with the flour before baking, can be used herein.

The rye crispbread corresponded to the product described in example 12.

### Example 14

### Preparation of a wheat crispbread containing plant sterol

A crispbread was prepared by using a conventional wheat crispbread recipe (Vaasan Mylly). The plant sterol was added by replacing part of the flour with a plant-sterol-flour premix that was prepared according to examples 2 or 3. The plant sterol content of the dough was 1.5%. Moreover, a crispbread not containing plant sterol was prepared as a reference sample. The characteristics and the results of sensory evaluation of the breads are presented in Table 2.

**Table 2**

| Characteristics of wheat crispbreads containing 1.5% sitostanol | | |
|---|---|---|
| | Reference | Crispbread containing sitostanol |
| I Physical characteristics | | |
| Height (10 pcs) | 84 mm | 73 mm |
| Weight (10 pcs) | 143 g | 146 g |
| Moisture | 7.0% | 8.0% |
| Volume weight | 0.255 g/ml | 0.305 g /ml |
| Crumbliness | 20 | 29 |

| II Sensory evaluation (scale from 1 to 5) | | |
|---|---|---|
| Appearance | 4 | 4 |
| Smell | 5 | 5 |
| Taste | 5 | 4 |
| Structure | 4 | 3 |

Compared with reference breads, the breads containing sitostanol were slightly harder and more solid, and good in the appearance, aroma, taste and mouth-feel.

### Example 15

### Preparation of a wheat crispbread containing plant sterol

A crispbread was also prepared to which the plant sterol was added as a plant-sterol-sugar mixture prepared according to example 4. The amount of sitostanol in the dough was 1.5%. This test also produced a bread that was slightly harder and more solid and whose characteristics corresponded to those of the bread described in the previous example.

### Example 16

### Preparation of a crispbread of the digestive type containing plant sterol

A crispbread was prepared by using a conventional digestive crispbread recipe (Vaasan Mylly). The plant sterol was added by replacing part of the wheat flour with a plant-sterol-flour premix prepared according to examples 2 or 3. The plant sterol content of the dough was 1.5%. Moreover, a crispbread not containing plant sterol was prepared as a reference bread. Baking results are presented in Table 3

**Table 3**

| Characteristics of digestive crispbreads containing 1.5% sitostanol | | |
|---|---|---|
| | Reference | Crispbread containing sitostanol |
| I Physical characteristics | | |
| Height (10 pcs) | 67 mm | 61 mm |
| Weight (10 pcs) | 194.4 g | 184.4 g |
| Moisture | 5.5% | 5.4% |
| Volume weight | 0.371 g/ml | 0.381 g/ml |
| Crumbliness | 27 | 29 |

| II Sensory evaluation (scale from 1 to 5) | | |
|---|---|---|
| Appearance | 4 | 5 |
| Smell | 5 | 5 |
| Taste | 5 | 5 |
| Structure | 3 | 3 |

Compared with the reference bread, the breads containing sitostanol had a slightly harder and more solid structure, and their appearance, aroma, taste and mouth-feel were very good.

### Example 17

### Preparation of a crispbread of the digestive type containing plant sterol

A digestive crispbread was also prepared to which the plant sterol was added as a plant-sterol-sugar mixture prepared according to example 4. The amount of sitostanol in the dough was 1.5%. Also this test provided an excellent product whose characteristics corresponded to those of the bread described in the previous example.

### Example 18

### Preparation of oat biscuits containing plant sterol

Plant sterol was added to a dough by replacing part of the wheat flour with a plant-sterol-wheat-flour mixture prepared according to example 3. The plant sterol content of the dough was 1.5%.

Biscuit composition:

| | |
|---|---|
| Oat flakes | 3/4 dl |
| Wheat flour | 60 g |
| 10% plant sterol-wheat flour mixture | 60 g |
| Raisins | 1/2 dl |
| Sugar | 1 dl |
| Margarine | 100 g |
| Baking powder | 1/2 tsp |
| Milk | 3/4 dl |

The flour, plant-sterol-wheat-flour mixture and baking powder were mixed together. To melted margarine were added sugar, raisins, oat flakes, flour mixture and lastly milk. The dough was allowed to rest for half an hour at a cool temperature (4°C). The biscuit dough was roiled into small balls that were baked in the oven for 10 min at a temperature of 200°C.

Biscuits not containing plant sterol were prepared according to the same recipe as a reference sample. The biscuits containing plant sterol were slightly more compact, but otherwise their taste and structure corresponded to those of the reference sample.

### Example 19

### Preparation of oat biscuits containing plant sterol

Plant sterol was added to a dough by replacing part of the sugar with a plant-sterol-sugar mixture prepared according to example 4. The plant sterol content of the dough was 1.5%.

Biscuit composition:

| | |
|---|---|
| Oat flakes | 3/4 dl |
| Wheat flour | 120 g |
| Raisins | 1/2 dl |
| Sugar | 73 g |
| 33% plant-sterol-sugar mixture | 18 g |
| Margarine | 100 g |
| Baking powder | 1/2 tsp |
| Milk | 1/4 dl |

The plant-sterol-sugar mixture and wheat flour were mixed together. To melted margarine were added sugar, raisins, oat flakes, flour-plant-sterol-sugar mixture into which the baking powder was mixed, and lastly milk. The dough was allowed to rest for half an hour at a cool temperature (4°C). The biscuit dough was rolled into small balls that were baked in the oven for 10 min at a temperature of 175°C.

Biscuits not containing plant sterol were prepared according to the same recipe as a reference sample. The biscuits containing plant sterol were slightly more solid, but otherwise their taste and structure corresponded to those of the reference sample.

### Example 20

### Preparation of a shortcake containing plant sterol

Plant sterol was added to a batter by replacing part of the wheat flour with a plant-sterol-wheat-flour premix prepared according to example 3. The plant sterol content of the batter was 1.5%.

Shortcake composition:

| | |
|---|---|
| Wheat flour | 80 g |
| 10% plant-sterol-flour mixture | 114 g |
| Sugar | 2 dl |
| Vanilla sugar | 2 tsp |
| 3 eggs | |
| Margarine | 200 g |
| Baking powder | 2 tsp |

Margarine and sugar were creamed by beating, and the eggs were added to the mixture. The flour and plant-sterol-flour mixture was added to the cream. The batter was poured into a cake tin and baked in the oven for 50 min at a temperature of 175°C.

A cake not containing plant sterol was prepared as a reference sample. The cake containing plant sterol was slightly lower and moister inside, otherwise it corresponded to the reference sample.

### Example 21

### Preparation of a shortcake containing plant sterol

Plant sterol was added to a batter by replacing part of the sugar with a plant-sterol-sugar mixture prepared according to example 4. The plant sterol content of the batter was 2%.

Shortcake composition:

| | |
|---|---|
| Wheat flour | 3 dl |
| Sugar | 146 g |
| 33% plant-sterol-sugar mixture | 34 g |
| Vanilla sugar | 2 tsp |
| 3 eggs | |
| Margarine | 200 g |
| Baking powder | 2 tsp |

Margarine, sugar and plant-sterol-sugar mixture were creamed by beating and the eggs were added to the mixture. The flour was mixed into the froth. The batter was poured into a cake tin and baked in the oven for 50 min at a temperature of 175°C.

A cake not containing plant sterol was prepared as a reference sample. The cake containing plant sterol was slightly lower and moister inside, but otherwise it corresponded to the reference sample.

### Example 22

### Preparation of a thin rye crispbread containing plant sterol

Thin crispbreads were prepared by using a conventional thin crispbread recipe (Vaasan Mylly). Plant sterol was added by replacing part of the flour with a plant-sterol-flour mixture prepared according to examples 2 or 3. The plant sterol content of the dough was 1.5%. Moreover, thin crispbreads not containing plant sterol were prepared as a reference sample. The baking results are presented in Table 4.

**Table 4**

| Characteristics of thin crispbreads containing 1.5% sitostanol | | |
|---|---|---|
| | Reference | Thin crispbread containing sitostanol |
| I Physical characteristics | | |
| Height (10 pcs) | 40 mm | 43 mm |
| Moisture | 3.7% | 3.7% |
| Volume weight | 0.278 g/ml | 0.277 g/ml |
| pH | 4.57 | 4.57 |
| Acid value | 18.5 | 18.0 |

| II Sensory evaluation (scale from 1 to 5) | | |
|---|---|---|
| Appearance | 4 | 4 |
| Smell | 5 | 5 |
| Taste | 4 | 4 |
| Structure | 4 | 4 |

Compared with the reference bread, the thin crispbreads containing sitostanol were similar, and by appearance, aroma, taste and mouth-feel they were very good.

### Example 23

### Preparation of a sausage containing plant sterol

A sausage was prepared by using a conventional cooked sausage recipe with following ingredients:

| | |
|---|---|
| Beef-based ingredients | 30 - 40 % |
| Pork-based ingredients | 30 % |
| Water | 25 % |
| Milk powder and/or potato flour, wheat flour | 5 % |
| Salt | 1.5% |
| Admixtures (phosphates, etc) | 1 - 2 % |

Plant sterol was added by replacing milk powder with a mixture of milk powder and plant sterol in which the proportion of plant sterol was 20 % and which was prepared in the manner described in example 3.

A product of a Finnish ring sausage type was produced of the mixture, the product corresponding in structure and taste to a reference sausage not containing plant sterol.

A sausage of a meetwurst type can be prepared in a corresponding manner, in which the plant sterol can be ground either with admixtures or meat.

### Example 24

### Preparation of an animal feed containing plant sterol

A chicken feed was prepared by using the following basic recipe of chicken feed:

| | |
|---|---|
| Starch raw material (mainly barley) | 60 - 70 % |
| Protein component (mainly crushed soybean) | 20 - 30 % |
| Other ingredients | 5 - 10 % |
| - minerals (mainly CaCo₃) | |
| - vitamins | |
| - trace elements | |
| - amino acids | |
| - enzymes, if any | |

The plant sterol was ground with CaCo₃ in the manner described in example 3 into a premix containing about 20% of plant sterol. Thus the final plant sterol content of the feed mixture was 1%. A high cholesterol level is necessary for growing chickens. For this reason, the mixture containing plant sterol is recommended for hens in egg production.

A corresponding animal feed, for instance pig feed, with a cereal ingredient content of 60 to 80 %, can also be prepared by grinding a plant sterol and a cereal ingredient into a premix in the above-described manner.

## Claims

1. A premix, **characterized by** containing a pulverized plant sterol and/or stanol and a conventional foodstuff raw material that is selected from a group comprising cereal, leguminous plants, milk powder, fruits, vegetables and/or berries, fish, meat, bone, feather or rind, and having a mean particle size of less than 600 µm.

2. A premix as claimed in claim 1, **characterized in that** the particle size of the pulverized plant sterol or stanol in the mixture is less than 200 µm, preferably less than 132 µm.

3. A premix as claimed in claim 1 or 2, **characterized in that** the plant sterol or stanol is sitosterol, sitostanol, campestenol, clionastanol, brassicasterol or a mixture thereof.

4. A premix as claimed in claim 3, **characterized in that** the plant sterol or stanol is β-sitosterol or β-sitostanol, preferably β-sitostanol.

5. A premix as claimed in any one of claims 1 to 4, **characterized in that** the raw material is wheat, rye, oat, barley, buckwheat, millet, rice, maize, soybean, bean or potato starch.

6. A premix as claimed in any one of claims 1 to 5, **characterized in that** the amount of plant sterol or stanol is 1 to 60 % by weight, preferably 5 to 50 % by weight, more preferably 10 to 40 % by weight and most preferably 10 to 20 % by weight.

7. A premix as claimed in any one of claims 1 to 6, **characterized by** containing 5 to 25 % sitosterol or sitostanol, preferably 10 to 20 %, and cereal.

8. A premix as claimed in claim 7, **characterized in that** the cereal is wheat, rye, buckwheat or maize flour.

9. A premix as claimed in any one of claims 1 to 8, **characterized in that** the mean particle size of the pulverized premix preferably is less than 132 µm, more preferably 60 to 70 µm.

10. A method for the manufacture of a premix, **characterized in that** a plant sterol and/or stanol and a conventional foodstuff raw material which is cereal, leguminous plant, milk powder, berry, vegetable or fruit, fish, meat, bone, feather or rind are ground into a pulverized and homogenous mixture having a mean particle size of less than 600 µm.

11. A method as claimed in claim 10, **characterized in that** the plant sterol and/or stanol and the cereal are impact-milled together.

12. A method as claimed in claim 11, **characterized in that** the ingredients are impact-milled together to a mean particle size of less than 600 µm, preferably 500 µm.

13. A method as claimed in claim 10 or 11, **characterized in that** the cereal is in a form of whole grains, husked grains and/or pre-crushed grains.

14. A method as claimed in claim 10, **characterized in that** the ingredients are ground with an air jet grinder.

15. A method as claimed in claim 14, **characterized in that** the plant sterol and/or stanol and the cereal are jet-pulverized together to a mean particle size of less than 200 µm, preferably less than 20 to 132 µm, most preferably 20 to 70 µm and particularly 60 to 70 µm.

16. A method as claimed in claim 10, **characterized in that** the pulverized ingredients with a particle size of less than 132 µm are formed separately and thereafter combined into a homogenous mixture.

17. Premix as claimed in any one of claims 1 to 9 for use as a cholesterol-lowering substance edible as such.

18. Use of a premix as claimed in any one of claims 1 to 9 in the manufacture of edible substances.

19. Use as claimed in claim 18, **characterized in that** the premix is used in food processing industry, meat processing industry, dairy industry, baking industry, confectionery industry, beverage industry or animal feed industry.

20. Use as claimed in claim 19, **characterized in that** the premix is used for manufacturing bakery products.

21. A bakery product, **characterized by** containing a premix as claimed in any one of claims 1 to 9 and conventional ingredients of bakery products.

22. A bakery product as claimed in claim 21, **characterized by** being a plain bread, a sweet bakery product, a crispbread, a sweet or salted biscuit, a rusk, a thin crispbread, a cracker, a baked snack or a wafer.

23. A bakery product as claimed in claim 21 or 22, **characterized by** containing 0.3 to 5.0 %, preferably 0.5 to 3.0 % and most preferably 1 to 2 % of plant sterol and/or stanol.

24. Premix as claimed in any one of claims 1 to 9 for use as a cholesterol-lowering substance.

25. Edible product containing a premix as claimed in any one of claims 1 to 9 for use as a cholesterol-lowering substance.

26. Use of a plant sterol and/or stanol in bakery products as an anti-staling agent.

27. Bakery products, **characterized by** containing added amounts of plant sterol and/or stanol as an anti-staling agent.

## Patentansprüche

1. Vormischung, **dadurch gekennzeichnet, daß** sie ein pulverisiertes pflanzliches Sterin und/oder Stanol und einen herkömmlichen Nahrungsmittel-Rohstoff enthält, der aus der Gruppe ausgewählt ist, die Getreide, Hülsenfrüchte, Milchpulver, Obst, Gemüse und/oder Beeren, Fisch, Fleisch, Knochen, Feder oder Schwarte umfaßt, und eine mittlere Teilchengröße von weniger als 600 µm besitzt.

2. Vormischung gemäß Anspruch 1, **dadurch gekennzeichnet, daß** die Teilchengröße des pulverisierten pflanzlichen Sterins oder Stanols in der Mischung weniger als 200 µm, bevorzugt weniger als 132 µm beträgt.

3. Vormischung gemäß Anspruch 1 oder 2, **dadurch gekennzeichnet, daß** das pflanzliche Sterin oder Stanol Sitosterin, Sitostanol, Campestenol, Clionastanol, Brassicasterin oder eine Mischung daraus ist.

4. Vormischung gemäß Anspruch 3, **dadurch gekennzeichnet, daß** das pflanzliche Sterin oder Stanol β-Sitosterin oder β-Sitostanol ist, bevorzugt β-Sitostanol.

5. Vormischung gemäß einem der Ansprüche 1 bis 4, **dadurch gekennzeichnet, daß** der Rohstoff Weizen, Roggen, Hafer, Gerste, Buchweizen, Hirse, Reis, Mais, Sojabohne, Bohne oder Kartoffelstärke ist.

6. Vormischung gemäß einem der Ansprüche 1 bis 5, **dadurch gekennzeichnet, daß** die Menge des pflanzlichen Sterins oder Stanols 1 bis 60 Gew.-%, bevorzugt 5 bis 50 Gew.-%, besonders bevorzugt 10 bis 40 Gew.-% und am meisten bevorzugt 10 bis 20 Gew.-% beträgt.

7. Vormischung gemäß einem der Ansprüche 1 bis 6, **dadurch gekennzeichnet, daß** sie 5 bis 25 % Sitosterin oder Sitostanol, bevorzugt 10 bis 20 %, und Getreide enthält.

8. Vormischung gemäß Anspruch 7, **dadurch gekennzeichnet, daß** das Getreide Weizen-, Roggen-, Buchweizen- oder Maismehl ist.

9. Vormischung gemäß einem der Ansprüche 1 bis 8, **dadurch gekennzeichnet, daß** die mittlere Teilchengröße der pulverisierten Vormischung bevorzugt geringer als 132 µm ist, besonders bevorzugt 60 bis 70 µm.

10. Verfahren zur Herstellung einer Vormischung, **dadurch gekennzeichnet, daß** ein pflanzliches Sterin und/oder Stanol und ein herkömmlicher Lebensmittelrohstoff, der Getreide, Hülsenfrüchte, Milchpulver, Beeren, Gemüse oder Obst, Fisch, Fleisch, Knochen, Feder oder Schwarte ist, zu einer pulverisierten und homogenen Mischung mit einer mittleren Teilchengröße von weniger als 600 µm gemahlen werden.

11. Verfahren gemäß Anspruch 10, **dadurch gekennzeichnet, daß** das pflanzliche Sterin und/oder Stanol und das Getreide zusammen mit einer Schlagmühle gemahlen werden.

12. Verfahren gemäß Anspruch 11, **dadurch gekennzeichnet, daß** die Bestandteile zusammen zu einer mittleren Teilchengröße von weniger als 600 µm, bevorzugt 500 µm, mit einer Schlagmühle gemahlen werden.

13. Verfahren gemäß Anspruch 10 oder 11, **dadurch gekennzeichnet, daß** das Getreide in Form von Vollkorn, umhüllten Körnern und/oder vorgequetschten Körnern ist.

14. Verfahren gemäß Anspruch 10, **dadurch gekennzeichnet, daß** die Bestandteile mit einer Luftdruckmühle gemahlen werden.

15. Verfahren gemäß Anspruch 14, **dadurch gekennzeichnet, daß** das pflanzliche Sterin und/oder Stanol und das Getreide zusammen zu einer mittleren Teilchengröße von weniger als 200 µm, bevorzugt weniger als 20 bis 132 µm, am meisten bevorzugt 20 bis 70 µm und insbesondere 60 bis 70 µm strahlpulverisiert werden.

16. Verfahren gemäß Anspruch 10, **dadurch gekennzeichnet, daß** die pulverisierten Bestandteile mit einer Teilchengröße von weniger als 132 µm separat gebildet und danach zu einer homogenen Mischung vereinigt werden.

17. Vormischung gemäß einem der Ansprüche 1 bis 9 zur Verwendung als Cholesterin-senkende Substanz, die als solche eßbar ist.

18. Verwendung einer Vormischung wie in einem der Ansprüche 1 bis 9 beansprucht in der Herstellung von eßbaren Substanzen.

19. Verwendung gemäß Anspruch 18, **dadurch gekennzeichnet, daß** die Vormischung in der nahrungsmittelverarbeitenden Industrie, fleischverarbeitenden Industrie, Milchindustrie, Backindustrie, Süßwarenindustrie, Getränkeindustrie oder Tierfutterindustrie verwendet wird.

20. Verwendung gemäß Anspruch 19, **dadurch gekennzeichnet, daß** die Vormischung zur Herstellung von Backwaren verwendet wird.

21. Backware, **dadurch gekennzeichnet, daß** sie eine Vormischung wie in einem der Ansprüche 1 bis 9 beansprucht und herkömmliche Bestandteile für Backwaren enthält.

22. Backware gemäß Anspruch 21, **dadurch gekennzeichnet, daß** sie einfaches Brot, eine süße Backware, Knäckebrot, ein süßer oder gesalzener Keks, Zwieback, dünnes Knäckebrot, ein Kräcker, ein gebackener Knabberartikel oder eine Waffel ist.

23. Backware gemäß Anspruch 21 oder 22, **dadurch gekennzeichnet, daß** sie 0,3 bis 5 %, bevorzugt 0,5 bis 3,0 % und am meisten bevorzugt 1 bis 2 % pflanzliches Sterin und/oder Stanol enthält.

24. Vormischung wie in einem der Ansprüche 1 bis 9 beansprucht zur Verwendung als Cholesterin-senkende Substanz.

25. Eßbares Produkt, das eine Vormischung wie in einem der Ansprüche 1 bis 9 beansprucht zur Verwendung als Cholesterin-senkende Substanz enthält.

26. Verwendung eines pflanzlichen Sterins und/oder Stanols in Backwaren als Frischhaltemittel.

27. Backwaren, **dadurch gekennzeichnet, daß** sie zugegebene Mengen von pflanzlichem Sterin und/oder Stanol als Frischhaltemittel enthalten.

## Revendications

1. Préparation, **caractérisée en ce qu'**elle contient, à l'état de poudre, un phytostérol et/ou un phytostanol, ainsi qu'une matière première alimentaire classique choisie dans un ensemble comprenant les céréales et légumineuses, le lait en poudre, les fruits, légumes et/ou baies, et les poisson, viande, os, plumes et peaux, et **en ce qu'**elle se présente en particules dont la taille moyenne vaut moins de 600 µm.

2. Préparation conforme à la revendication 1, **caractérisée en ce que** les particules de phytostérol ou phytostanol en poudre présentes dans le mélange ont une taille inférieure à 200 µm, et de préférence, inférieure à 132 µm.

3. Préparation conforme à la revendication 1 ou 2, **caractérisée en ce que** le phytostérol ou phytostanol est du sitostérol, du sitostanol, du campesténol, du clionastanol, du brassicastérol ou un mélange de ces composés.

4. Préparation conforme à la revendication 3, **caractérisée en ce que** le phytostérol ou phytostanol est du β-sitostérol ou du β-sitostanol, et de préférence du β-sitostanol.

5. Préparation conforme à l'une des revendications 1 à 4, **caractérisée en ce que** la matière première est du blé, du seigle, de l'avoine, de l'orge, du sarrasin, du millet, du riz, du maïs, du soja, des haricots, ou de la fécule de pomme de terre.

6. Préparation conforme à l'une des revendications 1 à 5, **caractérisée en ce que** le phytostérol ou phytostanol s'y trouve en une proportion pondérale valant de 1 à 60 %, de préférence de 5 à 50 %, mieux encore de 10 à 40 %, et surtout de 10 à 20 %.

7. Préparation conforme à l'une des revendications 1 à 6, **caractérisée en ce qu'**elle contient de 5 à 25 % et de préférence de 10 à 20 % de sitostérol ou de sitostanol, et une céréale.

8. Préparation conforme à la revendication 7, **caractérisée en ce que** la céréale est une farine de blé, de seigle, de sarrasin ou de maïs.

9. Préparation conforme à l'une des revendications 1 à 8, **caractérisée en ce que** la taille moyenne des particules de la préparation en poudre est de préférence inférieure à 132 µm, et mieux encore, vaut de 60 à 70 µm.

10. Procédé de fabrication d'une préparation, **caractérisé en ce que** l'on moud un phytostérol et/ou un phytostanol et une matière première alimentaire classique qui est une céréale ou une légumineuse, du lait en poudre, des fruits, des légumes ou des baies, ou du poisson, de la viande, des os, des plumes ou des peaux, pour en faire un mélange homogène pulvérulent dont les particules ont une taille moyenne inférieure à 600 µm.

11. Procédé conforme à la revendication 10, **caractérisé en ce que** l'on moud ensemble, par attrition, un phytostérol et/ou un phytostanol et une céréale.

12. Procédé conforme à la revendication 11, **caractérisé en ce que** l'on moud les ingrédients ensemble, par attrition, jusqu'à les réduire en particules dont la taille moyenne est inférieure à 600 µm, et de préférence, à 500 µm.

13. Procédé conforme à la revendication 10 ou 11, **caractérisé en ce que** la céréale se présente sous forme de grains entiers, de grains mondés et/ou de grains concassés.

14. Procédé conforme à la revendication 10, **caractérisé en ce que** l'on broie les ingrédients à l'aide d'un broyeur à jet d'air.

15. Procédé conforme à la revendication 14, **caractérisé en ce que** l'on pulvérise au jet, ensemble, un phytostérol et/ou un phytostanol et une céréale, jusqu'à les réduire en particules dont la taille moyenne est inférieure à 200 µm, et vaut de préférence de moins de 20 à 132 µm, mieux encore de 20 à 70 µm, et surtout de 60 à 70 µm.

16. Procédé conforme à la revendication 10, **caractérisé en ce que** l'on réduit séparément les ingrédients en des poudres dont les particules ont une taille inférieure à 132 µm et que l'on combine ensuite en un mélange homogène.

17. Préparation conforme à l'une des revendications 1 à 9, utilisable en tant que substance abaissant le taux de cholestérol et consommable telle quelle.

18. Emploi d'une préparation, conforme à l'une des revendications 1 à 9, dans la fabrication d'aliments.

19. Emploi conforme à la revendication 18, **caractérisé en ce que** la préparation est employée dans l'industrie du traitement des aliments, dans l'industrie du traitement de la viande, dans l'industrie des produits laitiers, en boulangerie industrielle, en pâtisserie industrielle, dans l'industrie des boissons ou dans l'industrie des aliments pour animaux.

20. Emploi conforme à la revendication 19, **caractérisé en ce que** l'on emploie la préparation pour fabriquer des produits de boulangerie.

21. Produit de boulangerie, **caractérisé en ce qu'**il contient une préparation conforme à l'une des revendications 1 à 9, ainsi que des ingrédients habituels de produits de boulangerie.

22. Produit de boulangerie, conforme à la revendication 21, **caractérisé en ce qu'**il s'agit de pains, de viennoiseries, de biscuits de grains égrugés, de biscuits sucrés ou salés, de biscottes, de minces galettes de grains égrugés, de biscuits secs, de galettes ou de gaufres.

23. Produit de boulangerie, conforme à la revendication 21 ou 22, **caractérisé en ce qu'**il contient un phytostérol et/ou un phytostanol en une proportion valant de 0,3 à 5,0 %, de préférence de 0,5 à 3,0 %, et surtout de 1 à 2 %.

24. Préparation conforme à l'une des revendications 1 à 9, utilisable en tant que substance hypocholestérolémiante.

25. Produit consommable contenant une préparation conforme à l'une des revendications 1 à 9, utilisable en tant que substance abaissant le taux de cholestérol.

26. Emploi d'un phytostérol et/ou d'un phytostanol dans des produits de boulangerie, en tant qu'agent anti-rassissement.

27. Produits de boulangerie, **caractérisés en ce qu'**il contiennent un phytostérol et/ou un phytostanol, ajouté(s) en tant qu'agent(s) anti-rassissement.
